# EUROPÄISCHE PATENTANMELDUNG

(11) **EP 4 782 355 A1**
(43) Veröffentlichungstag der Anmeldung: **29.07.2026**
(21) Anmeldenummer: 25223493.5
(22) Anmeldetag: 15.12.2025
(51) Int. Cl.: B65D 19/18, F16B 35/04

(54) **BEFESTIGUNGSMITTEL MIT DURCHGEHENDER WERKZEUGAUFNAHME UND PALETTENVORRICHTUNG**

(30) Priorität: 22.01.2025 DE 102025102291
(71) Anmelder: Craemer GmbH, 33442 Herzebrock-Clarholz (DE)
(72) Erfinder: FINKE, Ralf-Peter, 33330 Gütersloh (DE); OUDSHOORN, Thijs, 3135 Vlaardingen (NL); EEK, Jan, 2498 Den Haag (NL)
(74) Vertreter: Patentanwälte Olbricht Buchhold Keulertz

(57) **Zusammenfassung**

Die Erfindung betrifft ein Befestigungselement (80) für eine Palettenvorrichtung (2), das zur Befestigung eines Unterteils (60) an einem Oberteil (20) mittels einer Rotation um eine Rotationsachse (RA) zumindest relativ zum Oberteil (20) ausgebildet ist. Das Befestigungselement weist einen in eine Aufnahmerichtung (AR) in eine Unterteilbefestigungsausnehmung (72) des Unterteils (60) einzuführenden Einführabschnitt (88), der einen Grundkörper (90) und eine Rotationseingriffseinrichtung umfasst, die zumindest ein derartig radial vom Grundkörper (90) abstehendes Rotationseingriffselement (92) aufweist, dass es durch eine Rotation des Befestigungselementes (80) mit einem Oberteilrotationseingriffselement (48) des Oberteils (20) in Eingriff zu bringen ist, und einen entgegen der Aufnahmerichtung (AR) an den Einführabschnitt (88) anschließenden Kopfabschnitt (84), der sich weiter radial von der Rotationsachse (RA) wegerstreckt als der Einführabschnitt (88) und zum Anliegen an einer vom Oberteil (20) abgewandten und die Unterteilbefestigungsausnehmung (72) umgebenden Druckaufnahmefläche des Unterteils (60) ausgebildet ist, und eine sich in die Aufnahmerichtung (AR) erstreckende Werkzeugaufnahme (86) auf. Erfindungsgemäß erstreckt sich die Werkzeugaufnahme (86) zumindest derartig axial, dass sie von einer zur Rotationsachse (RA) rechtwinkligen Mittelebene (ME), die von dem Kopfabschnitt (84) und einem vom Kopfabschnitt (84) abgewandten Ende (94) des Einführabschnittes (88) gleich weit beabstandet ist, geschnitten wird.

## Beschreibung

Die Erfindung betrifft ein Befestigungselement für eine Palettenvorrichtung. Das Befestigungselement ist zur Befestigung eines Unterteils an einem Oberteil mittels einer Rotation um eine Rotationsachse zumindest relativ zum Oberteil ausgebildet. Das Befestigungselement weist einen Einführabschnitt, einen Kopfabschnitt und eine Werkzeugaufnahme auf. Der Einführabschnitt ist in eine Aufnahmerichtung in eine Unterteilbefestigungsausnehmung des Unterteils einzuführen. Der Einführabschnitt umfasst einen Grundkörper und eine Rotationseingriffseinrichtung. Die Rotationseingriffseinrichtung weist ein derartig radial vom Grundkörper abstehendes Rotationseingriffselement auf, dass es durch eine Rotation des Befestigungselementes mit einem Oberteilrotationseingriffselement des Oberteils in Eingriff zu bringen ist. Der Kopfabschnitt schließt entgegen der Aufnahmerichtung an den Einführabschnitt an. Der Kopfabschnitt erstreckt sich weiter radial von der Rotationsachse weg als der Einführabschnitt. Der Kopfabschnitt ist zum Anliegen an einer vom Oberteil abgewandten Druckaufnahmefläche des Unterteils ausgebildet, die die Unterteilbefestigungsausnehmung umgibt. Die Werkzeugaufnahme erstreckt sich in die Aufnahmerichtung.

Ein derartiges Befestigungselement ist aus dem Stand der Technik bekannt. Es dient zur Ausbildung der Palettenvorrichtung aus dem Unterteil und dem Oberteil. Das Befestigungselement ist typischerweise derart ausgebildet, dass im Falle einer unbeabsichtigten, jedoch im Betrieb durchaus regelmäßig auftretenden Krafteinwirkung auf die Palettenvorrichtung in eine radiale Richtung, die zu einem Lösen des Unterteils vom Oberteil führt, ausschließlich das Befestigungselement zerstört wird. Anschließend können das Unterteil und das Oberteil durch ein neues Befestigungselement erneut aneinander befestigt und dadurch wiederverwendet werden.

Typischerweise bricht das Befestigungselement bei seiner Zerstörung zwischen der Rotationseingriffseinrichtung und dem Kopfabschnitt. Zumindest ein vom Kopfabschnitt abgewandtes Ende des Einführabschnitt verbleibt aufgrund des Eingreifens des Rotationseingriffselementes in das Oberteilrotationseingriffselement am Oberteil. Um das neue Befestigungselement einsetzen zu können, ist zunächst das am Oberteil verbliebene Ende zu entfernen. Das Entfernen ist schwierig, da die Werkzeugaufnahme, mittels der das Befestigungselement unter Nutzung eines Werkzeugs einfach zu rotieren ist, derart weit von dem vom Kopfabschnitt abgewandten Ende entfernt ausgebildet ist, dass sie in aller Regel nicht Teil des am Oberteil verbliebenen Teils des Befestigungselementes ist, sondern mit dem Kopfabschnitt abgebrochen ist. Der am Oberteil verbliebene Teil des Befestigungselementes weist keine praktikable Möglichkeit zur Anordnung eines Werkzeuges daran und damit zur Einleitung eines Drehmomentes auf.

Aufgabe der vorliegenden Erfindung ist die Bereitstellung eines Befestigungselementes, das derart ausgebildet ist, dass nach der beschriebenen Krafteinwirkung die Entfernung des üblicherweise im Oberteil verbleibenden Teils des Befestigungselementes aus dem Oberteil erleichtert ist. Weiterhin ist Aufgabe der Erfindung die Bereitstellung einer Palettenvorrichtung mit dem Befestigungselement.

Erfindungsgemäß wird die Aufgabe dadurch gelöst, dass sich die Werkzeugaufnahme zumindest derartig axial erstreckt, dass sie von einer zur Rotationsachse rechtwinkligen Mittelebene, die von dem Kopfabschnitt und einem vom Kopfabschnitt abgewandten Ende des Einführabschnittes gleich weit beabstandet ist, geschnitten wird. Bevorzugt wird die Werkzeugaufnahme von einer zur Rotationsachse rechtwinkligen Ebene geschnitten, die vom Kopfabschnitt und vom dem Kopfabschnitt zugewandten Ende der Rotationseingriffseinrichtung gleich weit beabstandet ist. Das führt dazu, dass bei üblichen Zerstörungsbildern des Befestigungselementes zumindest ein Teil der Werkzeugaufnahme von dem Teil des Befestigungselementes aufgewiesen wird, der nach seinem Bruch am Oberteil verbleibt. Somit ist insbesondere eine Möglichkeit geschaffen, das Werkzeug nicht nur zur Rotation des vollständigen Befestigungselementes, etwa zur Montage der Palettenvorrichtung, zu nutzen, sondern auch zum Lösen des nach dem Bruch am Oberteil verbliebenen Teils des Befestigungselementes zu nutzen.

Das Befestigungselement ist insbesondere aus einem Kunststoff ausgebildet. Das Befestigungselement ist insbesondere einstückig ausgebildet. Das Befestigungselement erstreckt sich bevorzugt länglich in die Aufnahmerichtung. Der Einführabschnitt ist im Vergleich zum Kopfabschnitt bevorzugt schlanker und in die Aufnahmerichtung länger ausgebildet. Zumindest der Grundkörper und/oder der Kopfabschnitt erstrecken/erstreckt sich insbesondere zumindest im Wesentlichen rotationssymmetrisch.

Das Rotationseingriffselement steht zumindest lokal radial vom Grundkörper ab. Im montierten Zustand des Befestigungselementes ist das Rotationseingriffselement derart angeordnet, dass das Oberteilrotationseingriffselement bezogen auf die Aufnahmerichtung zwischen dem Rotationseingriffselement und dem Kopfabschnitt angeordnet ist. Ein Lösen des Befestigungselementes vom Oberteil erfordert daher eine zumindest anteilig rotatorische Bewegung des Befestigungselementes relativ zum Oberteil.

Der Kopfabschnitt ist insbesondere zumindest im Wesentlichen wie ein Schraubenkopf ausgebildet. Insbesondere weist der Kopfabschnitt eine zumindest im Wesentlichen kreisringförmige Druckfläche auf, die dem Oberteil zugewandt ist und im montierten Zustand an der Druckaufnahmefläche des Unterteils anliegt. Der Kopfabschnitt umfasst insbesondere ein Stabilisierungselement, das sich rotationssymmetrisch von der Druckaufnahmefläche ausgehend entgegen der Aufnahmerichtung erstreckt. Die Werkzeugaufnahme erstreckt sich entgegen der Aufnahmerichtung bevorzugt bis zum, über den oder durch den Kopfabschnitt oder endet zwischen der Mittelebene und dem Kopfabschnitt.

Die Werkzeugaufnahme erstreckt sich bevorzugt zumindest derartig axial, dass sie von einer zur Rotationsachse rechtwinkligen Rotationseingriffsebene geschnitten wird. Die Rotationseingriffsebene berührt oder schneidet die Rotationseingriffseinrichtung, insbesondere das Rotationseingriffselement. Die Rotationseingriffsebene berührt insbesondere ein dem Kopfabschnitt zugewandtes Ende der Rotationseingriffseinrichtung bzw. des Rotationseingriffselementes. Somit ist das Werkzeug auch selbst dann noch einzusetzen, wenn das Befestigungselement unmittelbar angrenzend an die Rotationseingriffseinrichtung, durch die das Befestigungselement mit dem Oberteil verbunden ist, bricht.

Vorzugsweise erstreckt sich die Werkzeugaufnahme in die Aufnahmerichtung bis zu einem von dem Kopfabschnitt abgewandten Ende des Befestigungselementes. In diesem Fall ist das Werkzeug gar völlig unabhängig von der Bruchstelle einzusetzen.

Das Befestigungselement weist bevorzugt eine Werkzeugausnehmung auf, die sich in die Aufnahmerichtung insbesondere durch den Kopfabschnitt erstreckt und die in die Aufnahmerichtung zumindest bis zur Werkzeugaufnahme reicht. Besonders bevorzugt ist die Werkzeugaufnahme durch die sich vom Kopfabschnitt in die Aufnahmerichtung erstreckende Werkzeugausnehmung ausgebildet. Dadurch ist erreicht, dass die Werkzeugaufnahme sowohl nach dem Bruch als auch vor dem Bruch mit dem Werkzeug in die Aufnahmerichtung zu erreichen ist. Insbesondere erstreckt sich die Werkzeugaufnahme in die Aufnahmerichtung bis zum Ende der Werkzeugausnehmung und/oder die Werkzeugausnehmung in die Aufnahmerichtung bis zum Ende der Werkzeugaufnahme.

Bevorzugt weist das Befestigungselement einen zwischen der Werkzeugaufnahme und dem Kopfabschnitt angeordneten Verjüngungsabschnitt auf. Der Verjüngungsabschnitt hat eine die Werkzeugausnehmung umgrenzende Verjüngungsinnenfläche, deren Abstand von der Rotationsachse in die Aufnahmerichtung abnimmt. Die Verjüngungsinnenfläche ist insbesondere zumindest im Wesentlichen kegelstumpfmantelflächenförmig oder trichterförmig ausgebildet. Der Verjüngungsabschnitt ist insbesondere Teil des Einführabschnittes. Der Verjüngungsabschnitt erleichtert die Verbindung des Werkzeuges mit der Werkzeugaufnahme.

Bevorzugt weist die Werkzeugaufnahme zumindest eine derart ausgebildete Werkzeugeingriffsfläche auf, dass ihr Abstand zur Rotationsachse zumindest abschnittsweise variiert. Bei der Werkzeugeingriffsfläche handelt es sich besonders bevorzugt um eine Außen- oder Innenfläche des Befestigungselementes. Die Werkzeugeingriffsfläche erstreckt sich insbesondere vollständig um die Rotationsachse und kann in einem zur Rotationsachse rechtwinkligen Querschnitt bogenförmige oder spitz zulaufende Abschnitte aufweisen oder beispielsweise zueinander angewinkelte Werkzeugeingriffsflächenabschnitte aufweisen. Die Werkzeugeingriffsfläche erstreckt sich insbesondere durch die Mittelebene und/oder die Rotationseingriffsebene. Die Ausführung der Werkzeugaufnahme mit der vorbeschriebenen Werkzeugeingriffsfläche erleichtert die Übertragung eines Drehmomentes vom Werkzeug auf das Befestigungselement erheblich.

Die Werkzeugeingriffsfläche ist vorzugsweise durch eine Innenfläche des Befestigungselementes ausgebildet, die die Werkzeugausnehmung umgrenzt. Die Werkzeugeingriffsfläche ist insbesondere zumindest im Wesentlichen der Rotationsachse zugewandt. Zwischen der Rotationsachse und der Werkzeugeingriffsfläche ist insbesondere ein Freiraum ausgebildet, in den das Werkzeug einzuführen ist. Hierdurch ist der Aufbau des Befestigungselementes, insbesondere wenn die Werkzeugeingriffsfläche eine Innenfläche des Einführabschnittes ist, deutlich erhöht und dadurch eine sichere Übertragung des Drehmomentes ermöglicht.

Eine in einer zur Rotationsachse rechtwinkligen Ebene gelegene Kontur der Werkzeugeingriffsfläche ist bevorzugt zumindest über einen Teil der axialen Erstreckung der Werkzeugaufnahme, insbesondere zumindest über einen überwiegenden Teil der axialen Erstreckung der Werkzeugaufnahme unveränderlich ausgebildet. Besonders bevorzugt ist die Kontur über die gesamte Länge der Werkzeugaufnahme unveränderlich ausgebildet. Die gesamte Länge der Werkzeugaufnahme entspricht bevorzugt zumindest der Hälfte der Länge des Einführabschnittes und damit des Abstandes des Kopfabschnittes vom vom Kopfabschnitt abgewandten Ende des Befestigungselementes. Durch diese Ausbildung der Werkzeugeingriffsfläche ist das Werkzeug über zumindest einen weiten Teil des Einführabschnittes mit gleichbleibend hoher Qualität einzusetzen.

Die Kontur setzt sich bevorzugt aus Konturabschnitten zusammen, die in einer Umfangsrichtung aneinander anschließen und gleichförmig ausgebildet sind. Die Konturabschnitte sind besonders bevorzugt zumindest im Wesentlichen V-förmig und spiegelsymmetrisch zu einer Ebene ausgebildet, in der die Rotationsachse liegt. Die Kontur ist insbesondere als regelmäßiges Polygon und vorzugsweise sternförmig ausgebildet. Vorzugsweise ist die Werkzeugaufnahme als Innenmehrkantausnehmung, insbesondere als Innenzwölfkantausnehmung, ausgebildet. Dadurch ist ein üblicher Innensechskantschlüssel, auch Inbusschlüssel genannt, mit dem Befestigungselement in zwölf verschiedenen Stellungen in Eingriff zu bringen und somit das Drehmoment auch bei beengten Platzverhältnissen besonders praktikabel einzubringen.

Das Rotationseingriffselement ist bevorzugt als Gewindewendel ausgebildet. Die Gewindewendel erstreckt sich zumindest abschnittsweise spiralförmig um die Rotationsachse. Das bedeutet insbesondere, dass die Rotationseingriffseinrichtung als ein Gewinde ausgebildet ist. Bevorzugt ist die Rotationseingriffseinrichtung als Außengewinde oder als Innengewinde und/oder ein- oder mehrgängig ausgebildet. Die Gewindewendel erstreckt sich bevorzugt um zumindest 360° um den Grundkörper. Die Gewindewendel bewirkt, dass das Befestigungselement zur Befestigung des Unterteils am Oberteil in das Oberteil einzuschrauben ist, woraufhin das Befestigungselement insbesondere selbstgehemmt in einer verschraubten Stellung am Oberteil verbleibt. Alternativ zur Gewindewendel erstreckt sich das Rotationseingriffselement bevorzugt derart, dass das Befestigungselement nach Art eines Bajonette-Verschlusses am Oberteil zu befestigen ist.

Die Rotationseingriffseinrichtung umfasst bevorzugt einen Schraubanschlag zur Begrenzung des Einschraubens des Befestigungselementes in die Oberteilbefestigungsausnehmung. Der Schraubanschlag schließt sich insbesondere an ein dem Kopfabschnitt zugewandtes Ende des Rotationseingriffselementes an. Besonders bevorzugt ist die Gewindewendel an ihrem Ende umgeknickt/angewinkelt zur Gewindegangrichtung ausgebildet. Durch den Schraubanschlag wird eine bestmögliche Befestigung des Befestigungselementes im Oberteil erleichtert und damit sichergestellt, dass das Befestigungselement im Schadensfall an der beabsichtigen Stelle bricht.

Die Aufgabe wird weiterhin gelöst durch eine Palettenvorrichtung. Die Palettenvorrichtung ist insbesondere als Palettenbox oder als Palette ausgebildet. Die Palettenvorrichtung ist bevorzugt zumindest überwiegend, insbesondere ausschließlich, aus Kunststoff ausgebildet. Die Palettenvorrichtung grenzt an eine Aufstandsebene an, in der idealerweise eine Bodenfläche liegt, auf der die Palettenvorrichtung bei ihrer Verwendung aufsteht.

Die Palettenvorrichtung weist das Oberteil und das Unterteil auf. Das Oberteil umfasst einen Ladeboden, der zur Begrenzung eines Laderaumes zur Aufstandsebene hin eine Laderaumbodenfläche ausbildet. Der Ladeboden ist zwischen dem Laderaum und der Aufstandsebene angeordnet. Der Laderaum ist ein gedachter Raum, in dem auf den Ladeboden aufgelegtes Ladegut angeordnet ist. Der Laderaum ist optional, jedoch nicht notwendigerweise, in andere Richtungen als in Richtung der Aufstandsebene gegenständlich begrenzt. Zwischen der Laderaumbodenfläche und der Aufstandsebene bildet der Ladeboden eine Stützelementaufnahmeeinrichtung aus, die eine der Aufstandsebene zugewandte Aufnahmegrundfläche ausbildet.

Das Unterteil ist mittels des vorbeschriebenen Befestigungselementes am Oberteil befestigt. Das Unterteil ist zumindest lokal zwischen dem Oberteil und der Aufstandsebene angeordnet und liegt an der Aufnahmegrundfläche an. Die Stützelementaufnahmeeinrichtung ist zur Aufnahme des Unterteils durch das Oberteil ausgebildet. Das Unterteil weist zumindest ein Stützelement auf. Das Stützelement wird durch das Befestigungselement am Oberteil, insbesondere an der Stützelementaufnahmeeinrichtung, befestigt, bevorzugt verschraubt. Das Stützelement wird durch das Befestigungselement insbesondere in die Aufnahmerichtung gegen das Oberteil gedrückt. Die Aufnahmerichtung ist insbesondere rechtwinklig zur Aufstandsebene ausgerichtet.

Das Unterteil, insbesondere das Stützelement, weist insbesondere eine Unterteilbefestigungsausnehmung auf, die in die Aufnahmerichtung durchgängig ausgebildet ist. Das Oberteil weist insbesondere eine Oberteilbefestigungsausnehmung auf, die sich in die Aufnahmerichtung als Sackloch in den Ladeboden erstreckt. Das Befestigungselement erstreckt sich durch die Unterteilbefestigungsausnehmung in die Oberteilbefestigungsausnehmung. Die Oberteilbefestigungsausnehmung weist bevorzugt ein Oberteilrotationseingriffselement auf, das insbesondere ein Innengewinde ausbildet.

Insbesondere im Falle der Ausbildung der Palettenvorrichtung als Palettenbox weist das Oberteil bevorzugt mehrere Laderaumseitenwände auf. Die Laderaumseitenwände sind besonders bevorzugt schwenkbeweglich relativ zum Ladeboden angeordnet. Die Laderaumseitenwände dienen zur seitlichen Umgrenzung des Laderaumes und erstrecken sich hierzu angewinkelt zur Aufstandsebene flächig. Die angewinkelte Erstreckung ist derart zu verstehen, dass eine Ebene, innerhalb derer sich eine jeweilige Laderaumseitenwand hauptsächlich erstreckt, angewinkelt zur Aufstandsebene angeordnet ist, ohne dass die Laderaumseitenwände von der Aufstandsebene geschnitten werden.

Die Stützelementaufnahmeeinrichtung weist vorzugsweise zumindest eine, insbesondere zumindest zwei, Aufnahmeseitenwandungen zur seitlichen Begrenzung einer Stützelementaufnahme auf, innerhalb derer das Stützelement zumindest teilweise angeordnet ist. Die Stützelementaufnahme ist insbesondere eine U-förmige und zur Aufstandsebene hin offene Ausnehmung, in die das Stützelement in die Aufnahmerichtung einzuführen ist.

Bevorzugt weist das Unterteil der Palettenvorrichtung zumindest zwei, insbesondere zumindest drei Stützelemente auf. Das Unterteil umfasst bevorzugt ein Kufenelement, das die Stützelemente oder zumindest einen Teil der Stützelemente vom Oberteil beabstandet miteinander verbindet und an die Aufstandsebene angrenzt. Besonders bevorzugt weist das Unterteil insgesamt neun Stützelemente auf, die in drei Gruppen von je drei Stützelementen unterteilt sind, wobei jeder Gruppe ein Kufenelement zugeordnet ist.

Weitere Einzelheiten und Vorteile der Erfindung sind den nachfolgend beschriebenen, schematisch dargestellten Ausführungsbeispielen zu entnehmen; es zeigen:
- Fig. 1: eine erfindungsgemäße Palettenvorrichtung in einer perspektivischen Ansicht,
- Fig. 2: ein erfindungsgemäßes Befestigungselement in einer perspektivischen Ansicht,
- Fig. 3: das Befestigungselement in der perspektivischen Ansicht, wobei es geschnitten dargestellt ist,
- Fig. 4: den Bereich um ein Stützelement der Palettenvorrichtung gemäß Fig. 1, wobei die Palettenvorrichtung geschnitten dargestellt ist.

Die nachfolgend beschriebenen Merkmale der erfindungsgemäßen Ausführungsbeispiele können auch in anderen Kombinationen als dargestellt zu erfindungsgemäßen Weiterbildungen führen. Soweit sinnvoll sind gleiche oder gleich wirkende Komponenten der Ausführungsbeispiele mit identischen Bezugsziffern versehen.

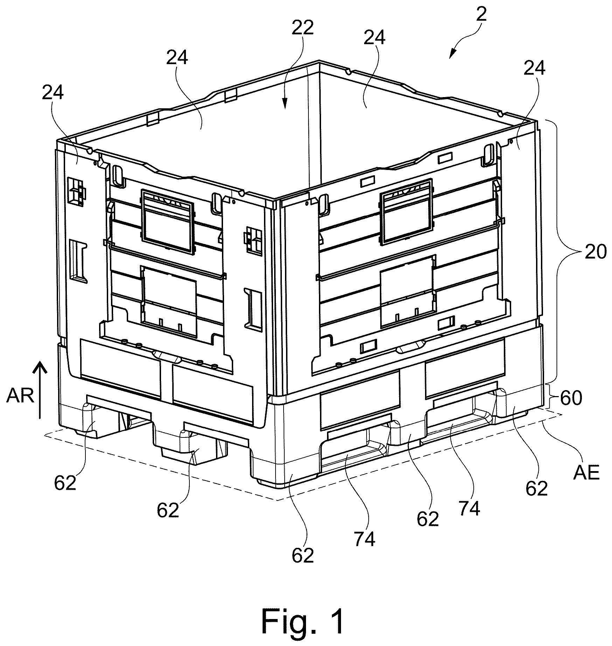

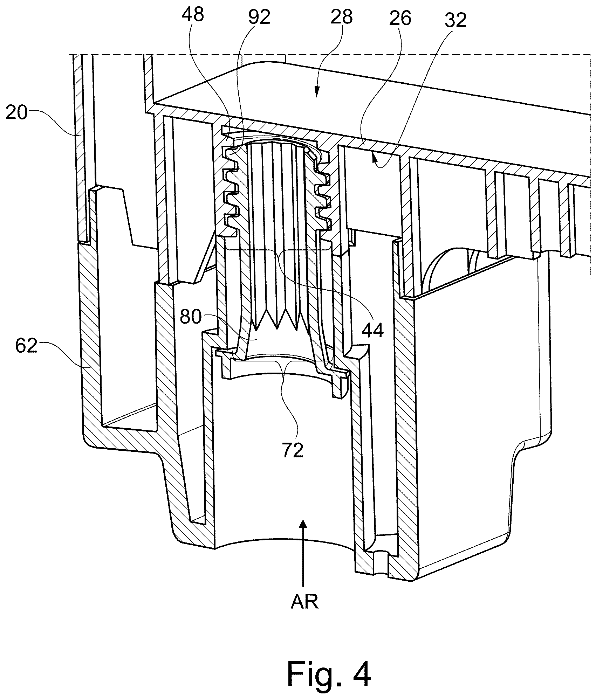

Die Palettenvorrichtung 2 gemäß Fig. 1 steht auf einer Aufstandsebene AE auf. Die Palettenvorrichtung 2 weist ein Oberteil 20 und ein Unterteil 60 auf, das zwischen dem Oberteil 20 und der Aufstandsebene AE angeordnet ist. Das Oberteil 20 bildet einen von der Aufstandsebene AE weggerichtet offenen Laderaum 22 aus. Der Laderaum 22 ist zur Aufstandsebene AE hin durch eine in Fig. 1 nicht dargestellte Laderaumbodenfläche 28 eines Ladebodens 26 des Oberteils 20 begrenzt (sh. Fig. 4). Seitlich ist der Laderaum 22 durch vier Laderaumseitenwände 24 begrenzt, die sich jeweils rechtwinklig zur Aufstandsebene AE flächig erstrecken.

Das Unterteil 60 weist neun Stützelemente 62 auf, von denen in Fig. 1 aufgrund der Perspektive fünf sichtbar sind. Zwei äußere Stützelementgruppen, die je drei Stützelemente 62 umfassen, weisen zusätzlich die Stützelemente 62 verbindende Kufenelemente 74 auf, die sich vom Oberteil 20 beabstandet erstrecken und an die Aufstandsebene AE angrenzen. Die Stützelemente 62 liegen an einer der Laderaumbodenfläche 28 gegenüberliegenden Aufnahmegrundfläche 32 des Oberteils 20 an. Zur nachfolgend im Detail erläuterten Befestigung des Unterteils 60 am Oberteil 20 sind die Stützelemente 62 in einer Aufnahmerichtung AR an das Oberteil 20 herangeführt.

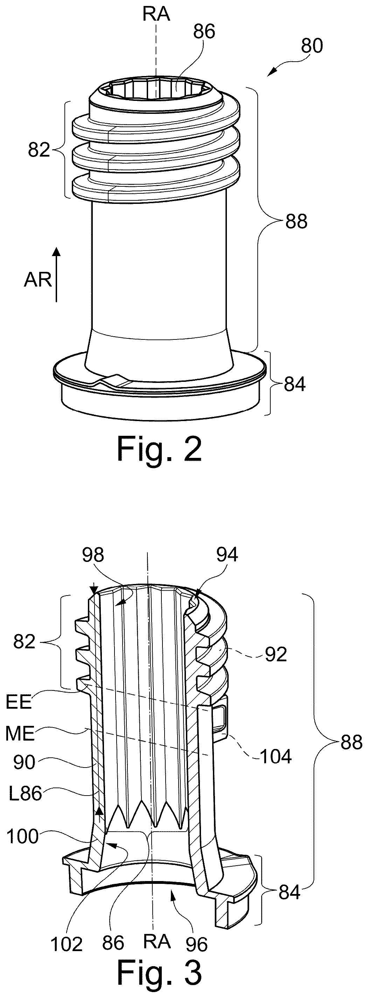

Die Befestigung des Unterteils 60 am Oberteil 20 erfolgt durch Befestigungselemente 80, wovon eines durch die Fig. 2 und 3 im Detail dargestellt ist. Das Befestigungselement 80 erstreckt sich länglich in Richtung einer Rotationsachse RA. Das Befestigungselement 80 setzt sich zusammen aus einem Einführabschnitt 88 und einem Kopfabschnitt 84, der sich von der Rotationsachse RA weiter radial weg erstreckt als der Einführabschnitt 88. Im montierten Zustand (sh. Fig. 4) ist der Einführabschnitt 88 in die Aufnahmerichtung AR in/durch eine Unterteilbefestigungsausnehmung 72 im Stützelement 62 eingeführt. Der Kopfabschnitt 84 liegt an einer vom Oberteil 20 abgewandten Fläche des Stützelementes 62 an.

Der Einführabschnitt 88 weist einen Grundkörper 90 und eine Rotationseingriffseinrichtung auf, die ein radial vom Grundkörper 90 abstehendes Rotationseingriffselement 92 aufweist. Das Rotationseingriffselement 92 erstreckt sich spiralförmig um die Rotationsachse RA, sodass die Rotationseingriffseinrichtung als Außengewinde 82 ausgebildet ist. Ein ein vom Kopfabschnitt 84 abgewandtes Ende 94 des Befestigungselementes 80 ausbildender Abschnitt des Einführabschnittes 88 ist im montierten Zustand in einer Oberteilbefestigungsausnehmung 44 eingeführt. Darin ist das Rotationseingriffselement 92 mit einem ein Innengewinde ausbildenden Oberteilrotationseingriffselement 48 verschraubt.

Das Befestigungselement 80 bildet eine in die Aufnahmerichtung AR durchgehende Werkzeugausnehmung 96 aus, die wiederum eine Werkzeugaufnahme 86 ausbildet. Die Werkzeugaufnahme 86 hat eine Länge L86, die mehr als der Hälfte der Länge des Einführabschnittes 88 entspricht. Insbesondere wird die Werkzeugaufnahme 86 von einer Mittelebene ME geschnitten, die vom Kopfabschnitt 84 und vom Ende 94 gleich weit beabstandet ist, und von einer Rotationseingriffsebene EE geschnitten, die das Rotationseingriffselement 92 schneidet. Eine der Rotationsachse RA zugewandte Innenfläche der Werkzeugausnehmung 96 bildet eine Werkzeugeingriffsfläche 98 der Werkzeugaufnahme 86. Die Werkzeugeingriffsfläche 98 hat entlang ihres Umfangs einen variierenden Abstand von der Rotationsachse RA. Im Detail ist die Werkzeugaufnahme 86 als Innenzwölfkantausnehmung ausgebildet, die sich mit gleichbleibendem Querschnitt über die gesamte Länge L86 der Werkzeugaufnahme 86 erstreckt.

Zwischen dem Kopfabschnitt 84 und der Werkzeugaufnahme 86 weist der Einführabschnitt 88 einen Verjüngungsabschnitt 100 auf. Der Verjüngungsabschnitt 100 weist eine Verjüngungsinnenfläche 102 auf, die sich zylinderstumpfmantelförmig um die Rotationsachse RA erstreckt. An das Rotationseingriffselement 92 schließt sich ein zum Kopfabschnitt 84 gewandter Schraubanschlag 104 an.

### Bezugszeichenliste

- 2: Palettenvorrichtung
- 20: Oberteil
- 22: Laderaum
- 24: Laderaumseitenwand
- 26: Ladeboden
- 28: Laderaumbodenfläche
- 32: Aufnahmegrundfläche
- 44: Oberteilbefestigungsausnehmung
- 48: Oberteilrotationseingriffselement
- 60: Unterteil
- 62: Stützelement
- 72: Unterteilbefestigungsausnehmung
- 74: Kufenelement
- 80: Befestigungselement
- 82: Außengewinde
- 84: Kopfabschnitt
- 86: Werkzeugaufnahme
- 88: Einführabschnitt
- 90: Grundkörper
- 92: Rotationseingriffselement
- 94: Ende des Befestigungselementes
- 96: Werkzeugausnehmung
- 98: Werkzeugeingriffsfläche
- 100: Verjüngungsabschnitt
- 102: Verjüngungsinnenfläche
- 104: Schraubanschlag
- AE: Aufstandsebene
- AR: Aufnahmerichtung
- EE: Rotationseingriffsebene
- L86: Länge der Werkzeugaufnahme
- ME: Mittelebene
- RA: Rotationsachse

## Patentansprüche

1. Befestigungselement (80) für eine Palettenvorrichtung (2), das zur Befestigung eines Unterteils (60) an einem Oberteil (20) mittels einer Rotation um eine Rotationsachse (RA) zumindest relativ zum Oberteil (20) ausgebildet ist und
- einen in eine Aufnahmerichtung (AR) in eine Unterteilbefestigungsausnehmung (72) des Unterteils (60) einzuführenden Einführabschnitt (88), der einen Grundkörper (90) und eine Rotationseingriffseinrichtung umfasst, die zumindest ein derartig radial vom Grundkörper (90) abstehendes Rotationseingriffselement (92) aufweist, dass es durch eine Rotation des Befestigungselementes (80) mit einem Oberteilrotationseingriffselement (48) des Oberteils (20) in Eingriff zu bringen ist,
- einen entgegen der Aufnahmerichtung (AR) an den Einführabschnitt (88) anschließenden Kopfabschnitt (84), der sich weiter radial von der Rotationsachse (RA) wegerstreckt als der Einführabschnitt (88) und zum Anliegen an einer vom Oberteil (20) abgewandten und die Unterteilbefestigungsausnehmung (72) umgebenden Druckaufnahmefläche des Unterteils (60) ausgebildet ist, und
- eine sich in die Aufnahmerichtung (AR) erstreckende Werkzeugaufnahme (86)
aufweist,
**dadurch gekennzeichnet, dass** sich die Werkzeugaufnahme (86) zumindest derartig axial erstreckt, dass sie von einer zur Rotationsachse (RA) rechtwinkligen Mittelebene (ME), die von dem Kopfabschnitt (84) und einem vom Kopfabschnitt (84) abgewandten Ende (94) des Einführabschnittes (88) gleich weit beabstandet ist, geschnitten wird.

2. Befestigungselement nach Anspruch 1,
**dadurch gekennzeichnet, dass** sich die Werkzeugaufnahme (86) zumindest derartig axial erstreckt, dass sie von einer zur Rotationsachse (RA) rechtwinkligen Rotationseingriffsebene (EE), die die Rotationseingriffseinrichtung berührt oder schneidet, geschnitten wird.

3. Befestigungselement nach Anspruch 1 oder 2,
**dadurch gekennzeichnet, dass** sich die Werkzeugaufnahme (86) in die Aufnahmerichtung (AR) bis zu einem von dem Kopfabschnitt (84) abgewandten Ende (94) des Befestigungselementes (80) erstreckt.

4. Befestigungselement nach einem der vorhergehenden Ansprüche,
**dadurch gekennzeichnet, dass** die Werkzeugaufnahme (86) durch eine sich vom Kopfabschnitt (84) in die Aufnahmerichtung (AR) erstreckende Werkzeugausnehmung (96) ausgebildet ist.

5. Befestigungselement nach Anspruch 4,
**gekennzeichnet durch** einen zwischen der Werkzeugaufnahme (86) und dem Kopfabschnitt (84) angeordneten Verjüngungsabschnitt (100) mit einer die Werkzeugausnehmung (96) umgrenzenden Verjüngungsinnenfläche (102), deren Abstand von der Rotationsachse (RA) in die Aufnahmerichtung (AR) abnimmt.

6. Befestigungselement nach einem der vorhergehenden Ansprüche,
**dadurch gekennzeichnet, dass** die Werkzeugaufnahme (86) zumindest eine derart ausgebildete Werkzeugeingriffsfläche (98) aufweist, dass ihr Abstand zur Rotationsachse (RA) zumindest abschnittsweise variiert.

7. Befestigungselement nach Anspruch 6,
**dadurch gekennzeichnet, dass** die Werkzeugeingriffsfläche (98) durch eine die Werkzeugausnehmung (96) umgrenzende Innenfläche des Befestigungselementes (80) ausgebildet ist.

8. Befestigungselement nach Anspruch 6 oder 7,
**dadurch gekennzeichnet, dass** die Kontur der Werkzeugeingriffsfläche (98) in die Aufnahmerichtung (AR) über die gesamte Länge (L86) der Werkzeugaufnahme (86) unveränderlich ausgebildet ist.

9. Befestigungselement nach einem der vorhergehenden Ansprüche,
**dadurch gekennzeichnet, dass** die Werkzeugaufnahme (86) als Innenmehrkantausnehmung, insbesondere als Innenzwölfkantausnehmung, ausgebildet ist.

10. Befestigungselement nach einem der vorhergehenden Ansprüche,
**dadurch gekennzeichnet, dass** das Rotationseingriffselement (92) als sich zumindest abschnittsweise spiralförmig um die Rotationsachse (RA) erstreckende Gewindewendel ausgebildet ist.

11. Befestigungselement nach einem der vorhergehenden Ansprüche,
**dadurch gekennzeichnet, dass** die Rotationseingriffseinrichtung als Außengewinde (82) ausgebildet ist.

12. Befestigungselement nach einem der vorhergehenden Ansprüche,
**gekennzeichnet durch** einen von der Rotationseingriffseinrichtung umfassten Schraubanschlag (104), der sich an ein dem Kopfabschnitt zugewandtes Ende des Rotationseingriffselementes anschließt und zur Begrenzung eines Einschraubens des Befestigungselementes (80) in die Oberteilbefestigungsausnehmung (44) ausgebildet ist.

13. Palettenvorrichtung (2), die zumindest überwiegend aus Kunststoff ausgebildet ist und an eine Aufstandsebene (AE) angrenzt, aufweisend
- ein Oberteil (20) mit einem Ladeboden (26), der der zur Begrenzung eines Laderaumes (22) zur Aufstandsebene (AE) hin eine Laderaumbodenfläche (28) und zwischen der Laderaumbodenfläche (28) und der Aufstandsebene (AE) eine Stützelementaufnahmeeinrichtung ausbildet, die eine der Aufstandsebene (AE) zugewandte Aufnahmegrundfläche (32) ausbildet, und
- zumindest ein mittels zumindest eines Befestigungselementes (80) am Oberteil (20) befestigtes Unterteil (60), das an die Aufstandsebene (AE) und an die Aufnahmegrundfläche (32) angrenzt und zumindest ein Stützelement (62) aufweist,
**gekennzeichnet durch** ein Befestigungselement (80) nach einem der vorhergehenden Ansprüche.

14. Palettenvorrichtung nach Anspruch 13,
**dadurch gekennzeichnet, dass** die Palettenvorrichtung (2) als Palettenbox ausgebildet ist und das Oberteil (20) mehrere Laderaumseitenwände (24) aufweist, die sich zur seitlichen Umgrenzung des Laderaumes (22) angewinkelt zur Aufstandsebene (AE) flächig erstrecken.

15. Palettenvorrichtung nach Anspruch 13 oder 14,
**dadurch gekennzeichnet, dass** das Unterteil (60) zumindest zwei, insbesondere zumindest drei, Stützelemente (62) und zumindest ein Kufenelement (74) aufweist, dass die Stützelemente (62) vom Oberteil (20) beabstandet miteinander verbindet und an die Aufstandsebene (AE) angrenzt.
